# EUROPÄISCHE PATENTSCHRIFT

(11) **EP 2 505 544 B1**
(45) Veröffentlichungstag und Bekanntmachung des Hinweises auf die Patenterteilung: **05.06.2013**
(21) Anmeldenummer: 12002284.3
(22) Anmeldetag: 29.03.2012
(51) Int. Cl.: B66F 9/075

(54) **Hubwagen mit einem verschliessbaren Batteriefach**
Lift vehicle having a closable battery compartment
Chariot élévateur ayant un compartiment à batterie refermable

(30) Priorität: 02.04.2011 DE 102011015936
(43) Veröffentlichungstag der Anmeldung: 03.10.2012
(73) Patentinhaber: Jungheinrich Aktiengesellschaft, 22047 Hamburg (DE)
(72) Erfinder: Badura, Klaus-Peter, 21357 Barum (DE); Meussen, Bernhard, 25337 Elmshorn (DE); Demir, Hüseyin, 21401 Thomasburg (DE)
(74) Vertreter: Hauck Patent- und Rechtsanwälte

(56) Entgegenhaltungen:
- DE-A1-102007 025 332
- JP-A- 8 165 094
- JP-A- 2003 257 398
- JP-A- 2004 091 081
- US-A- 3 003 573

## Beschreibung

Die vorliegende Erfindung betrifft einen Hubwagen, der ein durch einen Batteriedeckel verschließbares Batteriefach aufweist.

Hubwagen, beispielsweise Niederhubwagen, besitzen eine Batterie, die in einem durch einen Batteriedeckel verschließbaren Batteriefach mitgeführt wird. Grundsätzlich ist bei den Batterien zu unterscheiden, ob diese für den Ladevorgang ausgetauscht werden oder an Bord des Fahrzeugs verbleiben. Bei dem Einsatz von Lithium-Ionen-Batterien beispielsweise beträgt die Arbeitsleistung ungefähr 2,5 h, so dass vorgesehen ist, diese Batterien an dem Flurförderzeug auszutauschen.

Aus DE 10 2005 053 305 A1 ist ein Flurförderzeug mit einer Batterietür und einer Vertikalstütze bekannt geworden. Das bekannte Flurförderzeug besitzt eine Aufnahme für einen quer zur Fahrzeuglängsrichtung ein- und ausfahrbaren Batterieblock. Zur Abdeckung ist eine Batterietür vorgesehen, die um eine im Wesentlichen vertikale Schwenkachse von einer Schließposition in eine 90°-Öffnungsposition aufschwenkbar ist. Um die seitliche Einfederung und die Kippgefahr beim Herausnehmen des Batterieblocks aus dem Fahrzeug zu verringern, ist die Batterietür in dem zur Schwenkachse entfernten Bereich mit einer in der Öffnungsposition betätigbaren Vertikalstütze versehen. Ferner besitzt die Batterietür an ihrem unteren Ende einen abgekanteten Bereich, der als Abstützfläche für die Batterie dient.

Aus DE 10 2007 025 332 A1 ist ein Gegengewichtsstapler bekannt geworden, das ein Batteriefach zur Aufnahme eines Batterieblocks auf einer Aufstandsfläche des Batteriefachs besitzt. Das Batteriefach besitzt wenigstens eine seitliche Zugriffsöffnung zum Einbringen des Batterieblocks in das Batteriefach und zum Ausbringen des Batterieblocks aus dem Batteriefach. Es ist ferner mit einem seitlichen Verschlussdeckel für die Zugriffsöffnung versehen, der zwischen einer bestimmten Batteriefachöffnungsstellung und einer Verschlussstellung verstellbar ist, wobei der Verschlussdeckel in der bestimmten Batteriefachöffnungsstellung eine sich seitlich an die Aufstandsfläche des Batteriefachs nach außen hin anschließende Schiebebahnanordnung bildet, auf der der Batterieblock in das Batteriefach seitlich einführbar oder aus dem Batteriefach seitlich herausführbar ist.

Aus JP 2003/257398 ist ein Fahrzeug mit einem Batteriefach bekannt geworden, das durch einen zweiteiligen Deckel verschließbar ist. Der untere, an dem Fahrzeugkörper angelenkte Batteriedeckel besitzt eine leiterartige Abstützkonstruktion mit auf den Sprossen angeordneten Rollen. Die Abstützkonstruktion stützt sich an einem zweiten Abschnitt des Batteriedeckels ab, der an seinem oberen Ende an der Abstützkonstruktion angelenkt ist.

Der Erfindung liegt die Aufgabe zugrunde, einen Hubwagen bereitzustellen, bei dem ein Batteriewechsel besonders einfach und ergonomisch durchgeführt werden kann.

Erfindungsgemäß wird die Aufgabe durch einen Hubwagen mit den Merkmalen aus Anspruch 1 gelöst. Vorteilhafte Ausgestaltungen bilden den Gegenstand der Unteransprüche.

Die Erfindung betrifft einen Hubwagen als spezielles Flurförderzeug, das ein durch einen Batteriedeckel verschließbares Batteriefach aufweist. Das Batteriefach ist für austauschbare Batterien vorgesehen, die für einen Ladevorgang aus dem Fahrzeug entnommen werden können. Erfindungsgemäß ist der Batteriedeckel an dem Batteriefach derart angelenkt, dass er im geöffneten Zustand des Batteriedeckels dieser im Wesentlichen waagerecht von dem Fahrzeug absteht und eine Innenseite des Batteriedeckels eine Auflagefläche für die Batterie bildet. Bei dem erfindungsgemäßen Flurförderzeug wird das Batteriefach durch Aufklappen des Batteriedeckels geöffnet. Im geöffneten Zustand des Batteriefachs steht der Deckel waagerecht von dem Fahrzeug ab, so dass dessen Innenseite eine Auflagefläche für die zu entnehmende oder die in das Batteriefach einzusetzende Batterie bildet. Der Vorteil der Auflagefläche für die Batterie besteht darin, dass eine Bedienperson, die die Batterie in das Flurförderzeug einsetzt, diese auf der Auflagefläche abstellen und so die Batterie handhaben kann. Auch bei der Entnahme der Batterie aus dem

Batteriefach kann die Auflagefläche genutzt werden, um die entnommene Batterie darauf abzustellen.

Zur besseren Handhabung der entnommenen oder einzusetzenden Batterie ist der Batteriedeckel mit einem umlaufenden Anlagesteg versehen, der in einem geschlossenen Zustand des Batteriefachs in das Batteriefach hineinragt. Im geöffneten Zustand des Batteriefachs, wenn der Batteriedeckel sich in der Horizontalen befindet, steht der Anlagesteg nach oben. Der Vorteil des Anlagestegs ist, dass eine Batterie sicher auf der Auflagefläche des Batteriedeckels abgestellt werden kann, ohne dass die Gefahr eines Herunterrutschens der Batterie von dem Batteriedeckel besteht.

Erfindungsgemäß werden zur weiteren Erleichterung des Batteriewechsels zudem elektrische Kontaktmittel für die Batterie in dem Batteriefach bereitgestellt, die auf der dem Batteriedeckel gegenüberliegenden Seite des Batteriefachs angeordnet sind. Dabei wird die elektrische Kontaktierung der Batterie durch vollständiges Hineinschieben der Batterie in das Batteriefach erzielt, ohne dass eine Bedienperson zur Herstellung eines elektrischen Kontaktes gesondert eingreifen muss.

In einer bevorzugten Weiterbildung des erfindungsgemäßen Flurförderzeugs ist der Batteriedeckel schwenkbar um eine Achse an dem Fahrzeugkörper angelenkt, wobei die Achse im Wesentlichen parallel zu einer Längsrichtung des Fahrzeugs verläuft. Der um eine in Längsrichtung des Fahrzeugs verlaufende Achse schwenkbare Batteriedeckel steht in seinem geöffneten Zustand somit seitlich von dem Fahrzeug ab wobei seine Innenseite nach oben weist. Der seitliche Zugang in das Batteriefach ermöglicht, die auszutauschende Batterie von der Seite in das Flurförderzeug einzusetzen oder aus dem Flurförderzeug zu entnehmen.

In einer bevorzugten Ausgestaltung ist der Batteriedeckel an seinem unteren, zum Untergrund weisenden Ende an dem Fahrzeugkörper angelenkt. In dieser Ausgestaltung schwenkt der Batteriedeckel mit seinem freien oberen Ende um ungefähr 90° in die Horizontale.

In einer bevorzugten Ausgestaltung besitzt das Batteriefach einen Grund, der in einer Ebene mit der Auflagefläche des Batteriefachs liegt, wenn dieses geöffnet ist. Auf diese Weise ist es nicht notwendig, die Batterie aus dem Batteriefach herauszuheben, sondern die Batterie kann von der Auflagefläche in das Batteriefach hineingeschoben oder aus diesem herausgezogen werden.

In einer besonders bevorzugten Ausgestaltung besitzt die Auflagefläche des Batteriedeckels eine im Wesentlichen rechteckige Form, die der Länge und Breite einer für das Batteriefach vorgesehenen Batterie entspricht. In dieser Ausgestaltung kann die Batterie auf der Auflagefläche des Batteriedeckels sicher in einer genau vorgegebenen Position positioniert werden, die durch den Anlagesteg auf dem Batteriedeckel zusätzlich noch unterstützt werden kann. Ausgehend von der definierten Positionen auf dem Batteriedeckel besteht die Möglichkeit, die Batterie präzise in das Batteriefach einzuschiebcn.

In einer weiteren bevorzugten Ausbildung des erfindungsgemäßen Flurförderzeugs sind am Grund des Batteriefachs Rollen oder Schienen vorgesehen, die ein Einschieben und Herausziehen der Batterie aus dem Batteriefach erleichtern.

Die vorliegende Erfindung wird nachfolgend an einem Niederhubwagen näher erläutert. Es zeigt:
- Fig. 1: ein Lastteil für ein Niederhubwagen mit einem Batteriefach in einer perspektivischen Ansicht von schräg vorne,
- Fig. 2: das Lastteil aus Fig. 1 mit einer Batterie auf dem Batteriedeckel und
- Fig. 3: eine in das Batteriefach eingeschobene Batterie mit deren elektrischen Kontakten.

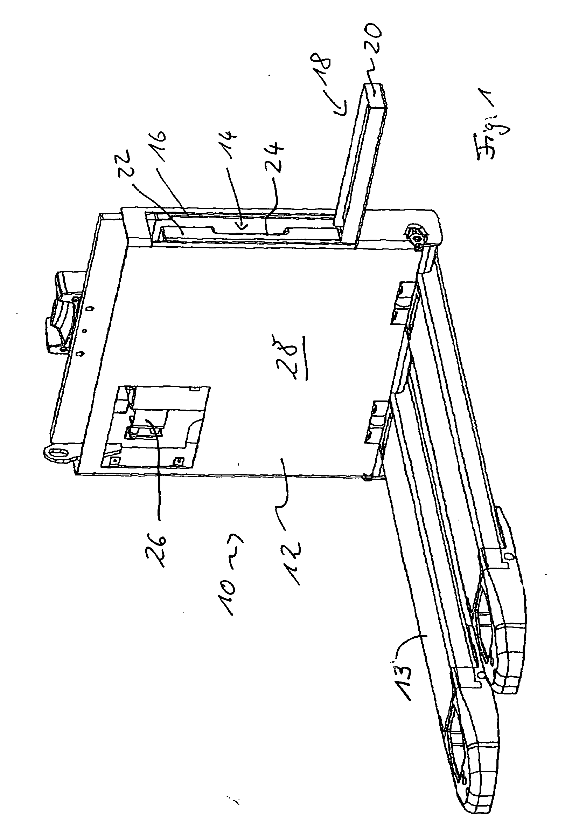

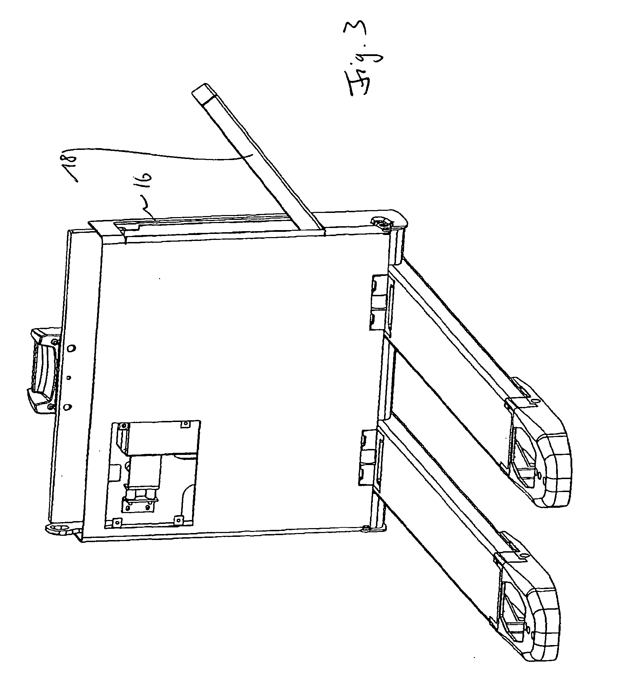

Fig. 1 zeigt ein vorderes Lastteil 10 an einem Hubwagen, insbesondere einen Niederhubwagen. Das Lastteil 10 besitzt einen Batterieraum 12, an dem ein Paar sich in Längsrichtung des Fahrzeugs erstreckender Radarme 13 vorgesehen sind. Zur besseren Übersicht wurden die Radarme ohne die vorderen abstützenden Rollen dargestellt. Der Batterieraum 12 des Lastteils besitzt eine im Wesentlichen rechteckige Form und wird in geeigneter Weise an dem Fahrzeugkörper oder Antriebsteil des Flurförderzeugs (nicht dargestellt) befestigt. Im oberen Bereich des Batterieraums 12 des Lastteils ist ein Batteriefach 14 vorgesehen, das eine seitliche Öffnung 16 besitzt. Die Öffnung 16 des Batteriefachs 14 besitzt eine rechteckige Form, wobei das Batteriefach eine größere Höhe und Breite besitzt. Verschlossen wird das Batteriefach durch einen Batteriedeckel 18, der in Fig. 1 in seiner horizontalen Position dargestellt ist. Der Batteriedeckel 18 wird an drei Seiten von einem Anlagesteg 20 begrenzt. Der Anlagesteg 20 weist nach oben und bildet einen zu drei Seiten begrenzten Aufnahmebereich für eine Batterie. Der Batteriedeckel 18 ist an seinem unteren Ende schwenkbar an dem Batteriefach 14 angeordnet (vgl. Fig. 3). Das Batteriefach ist dabei seitlich in dem Lastteil angeordnet, wobei das Batteriefach in einem oberen Bereich des Lastteils angeordnet ist. Die Anordnung des Batteriefachs in dem oberen Bereich stellt sicher, dass der Batteriedeckel 18 in seiner aufgeklappten Position eine ergonomisch günstige Höhe für ein Abstellen der Batterie besitzt.

Die in dem Batteriefach angeordnete Batterie 22 besitzt an ihrer zur Öffnung 16 des Batteriefachs weisenden Seite einen Griff 24 zum besseren Ergreifen der Batterie. Auf der innenliegenden Rückseite des Batteriefachs, die der Öffnung 16 des Batteriefachs gegenüber liegt, sind elektrische Kontaktmittel 26 vorgesehen, die im eingeschobenen Zustand der Batterie 22 eine elektrische Verbindung zu den Anschlüssen der Batterie herstellen. Wie in den Fign. 1 bis 3 zu erkennen, besitzt eine vordere Abdeckung 28 des Lastteils 10 im Bereich der elektrischen Kontakte 26 eine Wartungsöffnung. Nicht in der Figur dargestellt sind am Grund des Batteriefachs 14 angeordnete Rollen, die ein leichtes Einschieben der Batterie 22 in das Batteriefach 14 erlauben.

Bei der Benutzung dient der seitlich angeordnete, aufklappbare Batteriedeckel 18 in seinem aufgeklappten Zustand mit einer Innenseite als Auflagefläche für die Batterie 22. Die Batterie wird auf den Batteriedeckel gestellt und kann seitlich in das Batteriefach 14 eingeschoben werden. Durch das Einschieben der Batterie in das Batteriefach werden die elektrischen Kontakte 26, die beispielsweise als Stecker ausgebildet sein können, kontaktiert.

Zum Entnehmen der Batterie 22 wird ebenfalls der Batteriedeckel 18 aufgeklappt, und die Batterie 22 aus dem Batteriefach 14 unter Lösung der elektrischen Kontakte herausgezogen.

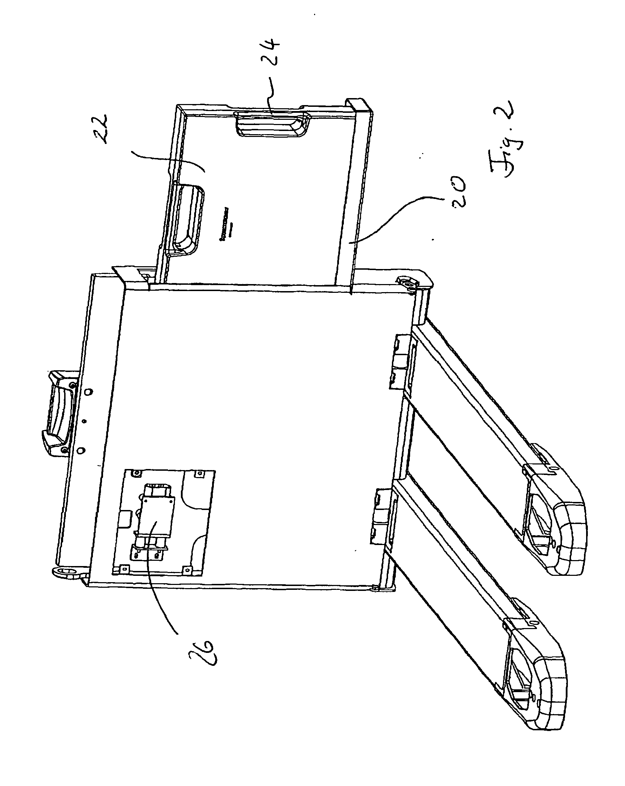

Fig. 2 zeigt eine Batterie 22, die auf dem Batteriedeckel 18 steht, wobei die Position der Batterie durch den Anlagesteg 20 definiert ist.

Fig. 3 zeigt den Batteriedeckel 18 in einer teilweise verschwenkten Position. Bei vollständig geschlossener Position des Batteriedeckels 18 ist der Anlagesteg 20 in dem Batteriefach 14 angeordnet, wobei die Öffnung 16 derart ausgebildet sein kann, dass sie den Batteriedeckel 18 in seiner geschlossenen Position hält.

## Patentansprüche

1. Hubwagen, insbesondere Niederhubwagen, der ein durch einen Batteriedeckel (18) verschließbares Batteriefach (14) aufweist, wobei
der Batteriedeckel (18) an dem Batteriefach (14) derart angelenkt ist, dass in seinem geöffneten Zustand der Batteriedeckel (18) im Wesentlichen waagerecht absteht und eine Innenseite des Batteriedeckels (18) eine Auflagefläche für eine Batterie (22) bildet, **dadurch gekennzeichnet, dass** der Batteriedeckel (18) einen umlaufenden Anlagesteg (20) besitzt, der im geschlossenen Zustand des Batteriefachs (14) in das Batteriefach (14) hineinragt und im geöffneten Zustand des Batteriefachs (14) nach oben steht, wobei das Batteriefach (14) auf der dem Batteriedeckel (18) gegenüber liegenden Seite elektrische Kontaktmittel (26) für die Batterie aufweist, die durch vollständiges Hineinschieben der Batterie in das Batteriefach kontaktiert werden.

2. Hubwagen nach Anspruch 1, **dadurch gekennzeichnet, dass** der Batteriedeckel (18) um eine Achse schwenkbar ist, die im Wesentlichen parallel zu einer Längsrichtung des Fahrzeugs verläuft.

3. Hubwagen nach Anspruch 1 oder 2, **dadurch gekennzeichnet, dass** der Batteriedeckel (18) an seinem unteren Ende angelenkt ist.

4. Hubwagen nach einem der Ansprüche 1 bis 3, **dadurch gekennzeichnet, dass** das Batteriefach (14) einen Grund besitzt, der in einer Ebene mit der Anlagefläche des Batteriedeckels (18) liegt, wenn der Batteriedeckel (18) geöffnet ist.

5. Hubwagen nach einem der Ansprüche 1 bis 4, **dadurch gekennzeichnet, dass** die Anlagefläche des Batteriedeckels (18) eine rechteckige Fläche besitzt, die in Länge und Breite der Grundfläche einer Batterie entspricht.

6. Hubwagen nach einem der Ansprüche 1 bis 5, **dadurch gekennzeichnet, dass** der Grund des Batteriefachs (14) Schienen und/oder Rollen besitzt.

## Claims

1. A lift vehicle, in particular a low lift vehicle, having a battery compartment (14) closeable by a battery cover (18), wherein
the battery cover (18) is hinged on the battery compartment (14) such that in its opened state, the battery cover (18) sticks out mainly horizontally and an inside of the battery cover (18) forms a support surface for a battery (22), **characterized in that** the battery cover (18) has a circumferential attachment bar (20), which in the closed state of the battery compartment (14) extends into the battery compartment (14) and in the opened state of the battery compartment (14) stands upward, wherein the battery compartment (14) has electrical contacting means (26) for the battery on the side opposite the battery cover (18), which are contacted by pushing the battery into the battery compartment completely.

2. The lift vehicle according to claim 1, **characterized in that** the battery cover (18) is pivotable around an axis, which runs mainly parallel to a longitudinal direction of the vehicle.

3. The lift vehicle according to claim 1 or 2, **characterized in that** the battery cover (18) is hinged on its lower end.

4. The lift vehicle according to one of claims 1 through 3, **characterized in that** the battery compartment (14) has a base, which lies in one plane with the attachment surface of the battery cover (18) when the battery cover (18) is open.

5. The lift vehicle according to one of claims 1 through 4, **characterized in that** the contact surface of the battery cover (18) has a rectangular surface, which corresponds in length and width with the base area of a battery.

6. The lift vehicle according to one of claims 1 through 5, **characterized in that** the base of the battery compartment (14) has rails and/or rollers.

## Revendications

1. Chariot élévateur, en particulier chariot élévateur à petite levée, comprenant un compartiment à batterie (14) refermable par un couvercle de batterie (18), dans lequel
le couvercle de batterie (18) est articulé sur le compartiment à batterie (14) de telle sorte que dans son état ouvert le couvercle de batterie (18) se projette essentiellement horizontalement et une face interne du couvercle de batterie (18) forme une surface d'appui pour une batterie (22), **caractérisé en ce que** le couvercle de batterie (18) possède une ailette d'appui (20) périphérique qui, à l'état fermé du compartiment à batterie (14), pénètre dans le compartiment à batterie (14), et est dressée vers le haut à l'état ouvert du compartiment à batterie (14), le compartiment à batterie (14) présentant sur la face opposée au couvercle de batterie (18) des moyens de contact électriques (26) pour la batterie, lesquels sont mis en contact par l'insertion complète de la batterie dans le compartiment à batterie.

2. Chariot élévateur selon la revendication 1, **caractérisé en ce que** le couvercle de batterie (18) est pivotant autour d'un axe qui s'étend essentiellement parallèlement à une direction longitudinale du véhicule.

3. Chariot élévateur selon les revendications 1 ou 2, **caractérisé en ce que** le couvercle de batterie (18) est articulé au niveau de son extrémité inférieure.

4. Chariot élévateur selon une des revendications 1 à 3, **caractérisé en ce que** le compartiment à batterie (14) possède un fond qui repose dans un plan avec la surface d'appui du couvercle de batterie (18), lorsque le couvercle de batterie (18) est ouvert.

5. Chariot élévateur selon une des revendications 1 à 4, **caractérisé en ce que** la surface d'appui du couvercle de batterie (18) possède une surface rectangulaire qui correspond dans la longueur et la largeur à la surface de base d'une batterie.

6. Chariot élévateur selon une des revendications 1 à 5, **caractérisé en ce que** le fond du compartiment à batterie (14) possède des rails et/ou des roulettes.
